# EUROPÄISCHE PATENTANMELDUNG

(11) **EP 0 622 005 A1**
(43) Veröffentlichungstag der Anmeldung: **02.11.1994**
(21) Anmeldenummer: 94103664.2
(22) Anmeldetag: 10.03.1994
(51) Int. Cl.: A01B 33/02

(54) **Verfahren zur Bodenbearbeitung von zu bepflanzenden Flächen und Bodenbearbeitungsmaschine zur Durchführung des Verfahrens**

(30) Priorität: 30.04.1993 DE 4314234
(71) Anmelder: FIRMA PEIN & PEIN, D-25469 Halstenbek (DE)
(72) Erfinder: Neugebauer, Rolf, D-56335 Neuhäusel (DE)
(74) Vertreter: Grommes, Karl F., Dr.

(57) **Zusammenfassung**

Die Erfindung betrifft ein Verfahren zur maschinellen Bodenbearbeitung von zu bepflanzenden Flächen, insbesondere von mit Bäumen zu bepflanzenden Waldflächen, wobei der Boden mit Hilfe eines an einer Bodenbearbeitungsmaschine (1) angeordneten Rotavators (7,8) aufgelockert wird.

Um eine leistungsfähige, dabei aber umwelt- und bodenschonende Bearbeitung der zu bepflanzenden Flächen vornehmen zu können, wird vorgeschlagen, den zu bepflanzenden Boden nur im Fahrspurbereich der Bodenbepflanzungsmaschine (1) aufzulockern und dann die Pflanzen in diese Flächen einzubringen. Die jeweiligen Spurabstände werden dabei vorzugsweise derart gewählt, daß sie den Abständen der Pflanzenreihen entsprechen. Der Bodenbereich zwischen den Fahrspuren -d.h. also ca. 80 % des Waldbodens- bleibt unberührt.

Bei der erfindungsgemäßen Bodenbearbeitungsmaschine (1) zur Durchführung des Verfahrens ist daher vorgesehen, daß am hinteren Fahrzeugteil (6) der Bodenbearbeitungsmaschine (1) mindestens zwei Rotavatoren (7,8) angeordnet sind. Diese Rotavatoren (7,8) lockern nur jeweils den Boden der durch die Bodenbearbeitungsmaschine (1) erzeugten Spuren auf.

## Beschreibung

### Technisches Gebiet

Die Erfindung betrifft ein Verfahren zur maschinellen Bodenbearbeitung von zu bepflanzenden Flächen, insbesondere von mit Bäumen zu bepflanzenden Waldflächen gemäß den Merkmalen des Oberbegriffs des Anspruchs 1. Die Erfindung bezieht sich ferner auf eine Bodenbearbeitungsmaschine zur Durchführung des Verfahrens.

### Stand der Technik

Um eine Fläche mit Bäumen aufzuforsten, wird herkömmlicherweise der Boden an der Stelle, an der die Pflanze eingesetzt werden soll, mit einer Wiedehopfhacke aufgehackt, die Pflanze eingesetzt und der Boden um die Pflanze dann festgetreten. Dieses Verfahren ist nicht nur zeitaufwendig und körperlich anstrengend, sondern es führt auch zu relativ schlechten Pflanzergebnissen. Denn für ein gutes Anwachsen der Pflanzen ist es erforderlich, daß das Erdreich etwa bis zu einer Tiefe von 50 cm und einer Breite von etwa 30 cm ausreichend gelockert wird, was manuell mit einer Hacke praktisch nicht realisiert werden kann.

Von der Anmelderin ist daher bereits ein Verfahren entwickelt worden, bei dem die Pflanzlöcher statt mit einer Hacke mit einem Erdbohrer ausgehoben werden. Diese sogenannte Lochbohrpflanzung bringt zwar eine wesentliche Erleichterung für das Pflanzpersonal mit sich und wird heute bei vielen Forstbetrieben angewandt, doch führt auch dieses Verfahren nicht zu einer befriedigenden Auflockerung des Bodens und Einbettung der Pflanze.

Die Anmelderin hat ferner ein Pflanzverfahren entwickelt, bei dem ein an einem Stiel befestigter hinten offener Keil von einem Bagger zu diesem hin durch den Boden gezogen wird. Der Keil spaltet den Boden auf, so daß die Pflanzen entsprechend tief eingesetzt werden können.

Nachteilig ist bei diesem Verfahren vor allem, daß der Boden durch das Spalten rechts und links stark verdichtet wird. Dadurch kann das Erdreich nach der Pflanzung nicht mehr richtig angetreten werden.

Schließlich gibt es ein heute nur noch selten angewendetes Verfahren, das darin besteht, die gesamte zu bepflanzende Fläche aufzulockern und die Pflanzen in den so gelockerten Boden einzusetzen. Hierfür wird eine Maschine benutzt, die das gesamte auf dem Erdboden liegende Material in diesen einarbeitet und ihn so in seiner biologischen Struktur zerstört. Ein weiterer wesentlicher Nachteil dieses Verfahrens besteht in der zu schnellen Mineralisierung sowie einer kurz nach der Auflockerung wieder einsetzenden Verdichtung des Bodens auf der gesamten Fläche.

Die heute immer stärker in den Vordergrund tretende Forderung nach einer ökologischen Aufforstung, bei der die aufzuforstende Fläche mit ihrer wertvollen Rohhumusauflage möglichst erhalten bleibt, hat dazu geführt, daß trotz der vorstehend beschriebenen Nachteile beim Aufforsten weiterhin die herkömmlichen Verfahren der Lochbohrpflanzung und der Pflanzung mittels Wiedehopfhacke im Vordergrund stehen.

### Darstellung der Erfindung

Der Erfindung liegt die Aufgabe zugrunde, ein automatisiertes umwelt- und bodenschonendes Verfahren zur Bodenbearbeitung von zu bepflanzenden Flächen anzugeben, das sowohl kostengünstig als auch leistungsfähig ist und darüber hinaus einen Beitrag zur Verbesserung des Waldbodens leistet. Ferner soll eine Bodenbearbeitungsmaschine angegeben werden, mit deren Hilfe das erfindungsgemäße Verfahren auf Waldflächen und Ödland durchgeführt werden kann.

Hinsichtlich des erfindungsgemäßen Verfahrens wird die Aufgabe durch die Merkmale des kennzeichnenden Teils des Anspruchs 1 gelöst. Danach wird vorgeschlagen, den zu bepflanzenden Boden nur im Fahrspurbereich der Bodenbepflanzungsmaschine aufzulockern und dann die Pflanzen in diese Fläche einzubringen. Die jeweiligen Spurabstände werden dabei derart gewählt, daß sie den Abständen der gewünschten Pflanzenreihen entsprechen. Der Bodenbereich zwischen den Fahrspuren -d.h. bei 3 m Pflanzabstand also ca. 80 % des Waldbodens- bleibt unberührt.

Um optimale Wachstumsbedingungen für die Pflanzen zu erreichen, wird vor dem Auflockern des Bodens in die Fahrspuren entsprechend dosierter Dünger (i.d.R. kohlensaurer Kalk) aufgebracht, der sich dann beim Auflockern des Bodens mit diesem vermischt.

Um eine gute Auflockerung des Bodens zu erreichen, wird er in jedem Spurbereich auf einer Breite von etwa 30 cm bis in eine Tiefe von etwa 50 cm aufgelockert.

Den Aufbau erfindungsgemäßer Bodenbearbeitungsmaschinen offenbaren insbesondere die Merkmale der kennzeichnenden Teile der Ansprüche 7,8,9,11,12,13.

Vorzugsweise sind die Rotavatoren am hinteren Teil des Zugfahrzeuges höhenvariabel angeordnet, so daß sie beim Auftreffen auf feste Gegenstände nach oben ausweichen können.

Durch Verwendung von Boogie-Achsen ist es außerdem möglich, daß die Maschine den Boden auch auf ungeräumten Flächen bis 30 Grad Neigung bearbeitet und Hindernisse bis zu einer Höhe von 80 cm überwindet.

Um zu erreichen, daß die erfindungsgemäße Maschine für unterschiedliche Pflanzreihenabstände benutzt werden kann, sind die Radachsen seitlich nach außen verschiebbar angeordnet.

Um ferner den Dünger beim Auflockern des Bodens mit diesem vermischen zu können, wird vorzugsweise an der Bodenbearbeitungsmaschine ein Substratbehälter angeordnet, der mit Förderschnecken verbunden ist, welche das Substrat in die Fahrzeugspuren unmittelbar vor die Rotavatoren befördern.

Die Maschine kann sowohl zur Bodenpflanzbettvorbereitung im Sommer/Herbst (Pflanzung im Herbst/Frühjahr) als auch zur Pflanzbettvorbereitung mit gleichzeitiger Pflanzung eingesetzt werden.

### Kurze Beschreibung der Zeichnung

Weitere Einzelheiten und Vorteile der Erfindung ergeben sich aus den folgenden anhand von Figuren erläuterten Ausführungsbeispielen. Es zeigen:
- Fig.1: schematisch eine perspektivische Darstellung eines Ausführungsbeispieles einer erfindungsgemäßen Bodenbearbeitungsmaschine mit heckseitig angeordneten Rotavatoren und Pflanzaggregaten,
- Fig.2: eine Draufsicht auf die in Fig.1 dargestellte Bodenbearbeitungsmaschine,
- Fig.3: eine Seitenansicht eines Rotavatorrades, wobei drei auf dem Rad axial versetzt angeordnete Schneidschwerter dargestellt sind, und
- Fig.4: eine Draufsicht auf einen Teil der auf eine Ebene abgewickelten Mantelfläche des in Fig.3 dargestellten Rotavatorrades zur Erläuterung der Wirkungsweise der Rotavatoren.

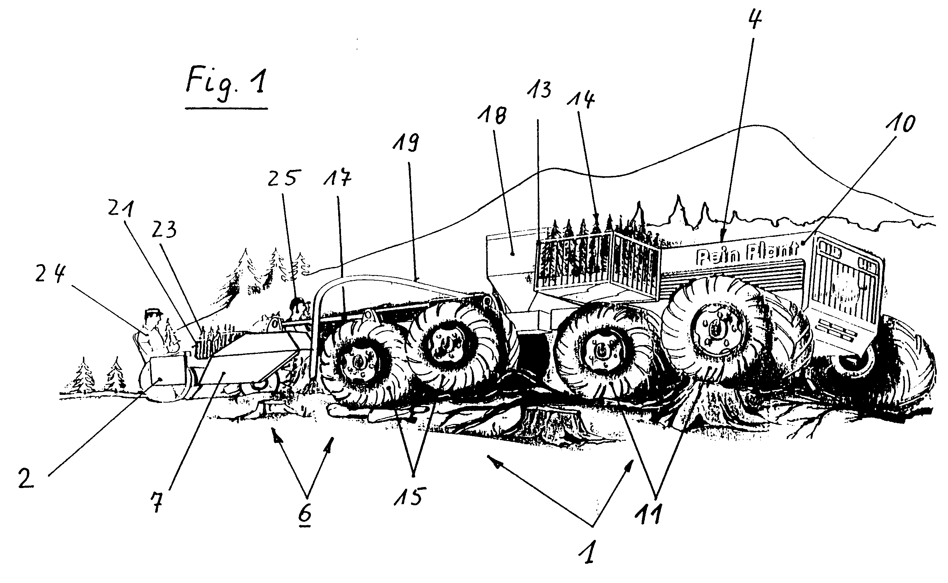

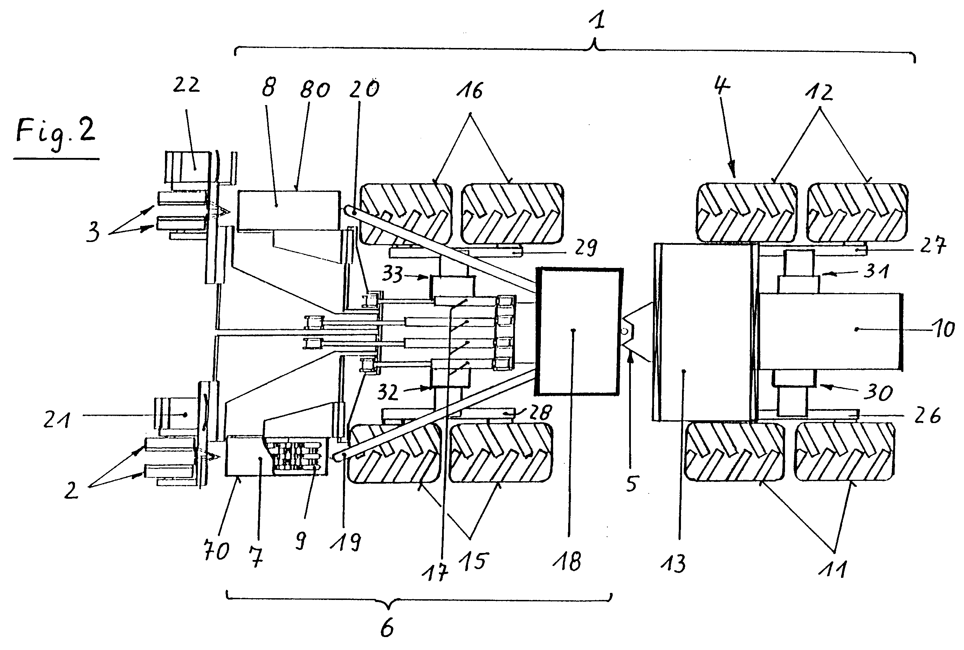

In Fig.1 ist mit 1 eine Bodenbearbeitungsmaschine bezeichnet, an der heckseitig Pflanzaggregate 2 und 3 (Fig.2) angeordnet sind. Bei der Bodenbearbeitungsmaschine 1 handelt es sich um ein 8-rädriges knickgelenktes Fahrzeug, welches aus einem vorderen vor dem Knickgelenk 5 angeordneten Fahrzeugteil 4 und einem hinteren hinter dem Knickgelenk 5 angeordneten Fahrzeugteil 6 besteht.

Das vordere Fahrzeugteil 4 der Bodenbearbeitungsmaschine 1 weist einen Motorblock 10 auf, der auf zwei Radpaaren 11, 12 gelagert ist. Ferner ist dort ein Pflanzenraumbehälter 13 für eine Bevorratung mit Pflanzen 14, möglichst für die gesamte zu bepflanzende Fläche, angeordnet.

Das hintere Fahrzeugteil 6 der Bodenbearbeitungsmaschine 1 weist ebenfalls zwei Radpaare 15, 16 auf, die an einem nicht im einzelnen dargestellten Rahmenteil befestigt sind. Heckseitig befinden sich an dem Fahrzeugteil 6 zwei Rotavatoren 7, 8, mit entsprechenden Rotavatorrädern 9. Die Rotavatorräder 9 sind dabei jeweils in einem zum Waldboden hin offenen Gehäuse 70, 80 angeordnet.

Ferner befinden sich an dem hinteren Fahrzeugteil 6 vier hydraulische Stellglieder 17 mit entsprechenden Aggregaten, mit deren Hilfe die Rotavatoren 7, 8 und gegebenenfalls auch die Pflanzaggregate 2,3 hinsichtlich ihrer Höhe in bezug auf den Boden einstellbar sind. Außerdem ist auf diesem Fahrzeugteil ein Substratbehälter 18 befestigt, der mit zwei Förderschnecken 19, 20 verbunden ist. Diese transportieren das jeweilige Substrat -in der Regel Kalkzur Bodendüngung dosiert in die Fahrzeugspur vor die Rotavatoren 7, 8.

An den Pflanzaggregaten 2,3 sind zwei Pflanzenbehälter 21, 22 vorgesehen, aus denen die entsprechenden Pflanzen 23 von dem Bedienungspersonal 24, 25 zum Einsetzen in den aufgelockerten Boden entnommen werden.

Als besonders vorteilhaft hat es sich erwiesen, wenn die in Fig.2 mit 26, 27 bzw. 28, 29 bezeichneten Achsen, an denen die Radpaare 11, 12 bzw. 15, 16 befestigt sind, als in der Höhe veränderbare Achsen (sog. Boogie-Achsen) ausgebildet sind. Denn mit derartigen Boogie-Achsen ist es möglich, die Bodenbearbeitungsmaschine 1 auf ungeräumten Flächen mit einer Neigung von bis zu 30 Grad einzusetzen, wobei Hindernisse von bis zu 80 cm Höhe überwunden werden können.

Außerdem sind die Radachsen 26-29 und damit auch die Radpaare 11-16 in axialer Richtung, d.h. seitlich nach außen, verschiebbar angeordnet. Dadurch wird erreicht, daß der Abstand der Fahrzeugspuren variiert und den jeweils geforderten Pflanzreihenabständen angepaßt werden kann. Die Verschiebbarkeit der Radachsen 26-29 wird durch mit Hilfe entsprechender steuerbaren Hydraulikzylindern 30-33 realisiert, die an den Radachsen 26-29 angeordnet sind (die Hydraulikzylinder sind derart dimensioniert, daß der Fahrspurabstand und damit der Pflanzreihenabstand zwischen 2 und 3 m variiert werden kann).

Zur Verteilung des Gewichtes der Bodenbearbeitungsmaschine 1 (im vorliegenden Ausführungsbeispiel 4,5 t) wurden die 8 Räder 11,12,15,16 mit einer 70 cm breiten Bereifung versehen. Dadurch wird ein außerordentlich geringer Bodendruck (ca. 0,1 kg/cm²) erreicht, so daß durch das Überfahren des Bodens im Fahrspurbereich praktisch keine nennenswerte Bodenverdichtung erfolgt.

Die Bodenbearbeitungsmaschine 1 wird vorteilhafterweise ferngesteuert. Dadurch kann die gesamte Bodenbearbeitungsmaschine 1 von einer Person in allen Funktionen überwacht und gesteuert werden. Insbesondere lassen sich folgende Funktionen fernsteuern:
- die Lenkung;
- die Spurbreite;
- das Heben und Senken der Pflanzaggregate 2, 3 (links und rechts unabhängig voneinander);
- das Heben und Senken der Rotavatoren 7, 8 (links und rechts unabhängig voneinander);
- die Einstellung der Rotavatoren 7, 8 auf Schwimmstellung;
- das An- und Ausschalten der Rotavatorräder 9 (links und rechts getrennt);
- der Wechsel der Drehrichtung der Rotavatorräder 9 (links und rechts getrennt);
- die Fahrgeschwindigkeit;
- die Motorumdrehung (Leistungsabgabe);
- die Einschaltung der Förderschnecken 19, 20;
- die Betätigung einer Hupe.

Der Bediener geht während der Bodenbearbeitung neben der Bodenbearbeitungsmaschine 1 her, weil er dadurch alle wesentlichen Funktionsteile im Blick hat. Insbesondere kann er so die Arbeit der Rotavatoren 7, 8 genau kontrollieren und je nach Bedarf nachsteuern.

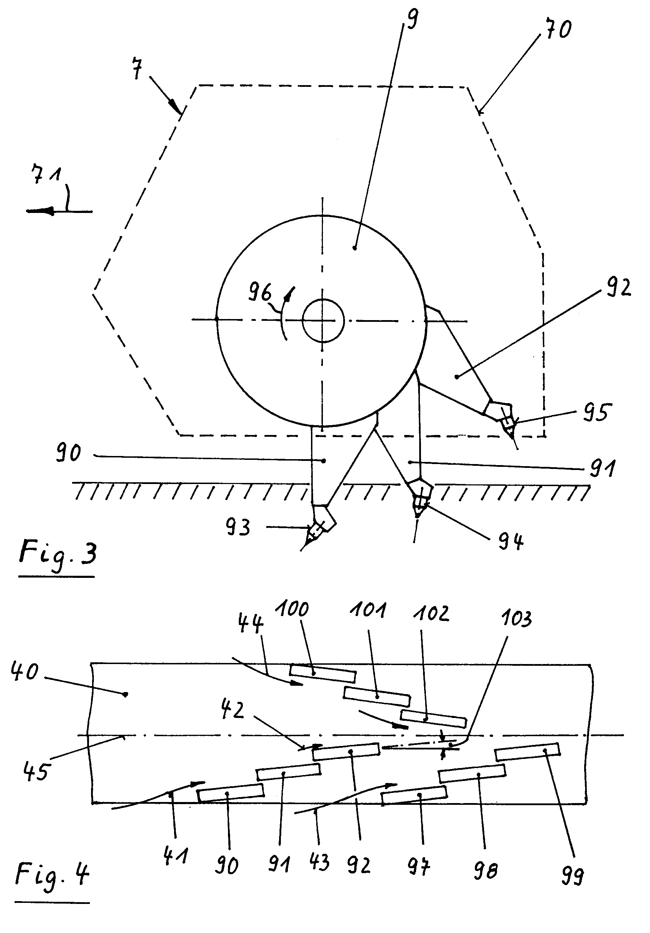

Fig.3 zeigt eine Seitenansicht des Rotavators 7 mit dem Rotavatorrad 9. Das nach unten offene Rotavatorgehäuse 70 ist gestrichelt dargestellt. An dem Rotavatorrad 9 sind axial und umfangseitig versetzt mehrere Schneidschwerter 90-92 angeordnet, von denen lediglich drei dargestellt sind. Insgesamt werden bei diesem Ausführungsbeispiel zwischen der jeweiligen Außenseite und der Mitte des Rotavatorrades jeweils 12 Schneidschwerter benutzt, und zwar derart, daß immer jeweils vier Schneidschwerter den gleichen axialen Abstand aufweisen. An den äußeren Enden der Schneidschwerter 90-92 sind auswechselbare Meißel 93-95 aus gehärtetem Stahl angeordnet. Die Rotationsrichtung des Rotavatorrades 9 ist mit dem Bezugszeichen 96 und die Bewegungsrichtung des Rotavators 7 mit 71 gekennzeichnet.

Fig.4 zeigt eine Abwicklung eines Teiles der Mantelfläche 40 des Rotavatorrades 9. Dabei sind die Schneidschwerter als Rechtecke dargestellt. Mit 90-92 sind wiederum die in Fig.3 dargestellten Schneidschwerter bezeichnet. An diese schließen sich auf der dem Betrachter zugewandten Seite die Schneidschwerter 97-99 an. Auf der dem Betrachter abgewandten Seite sind entsprechende Schneidschwerter angeordnet, wobei in Fig.4 lediglich drei dargestellt sind, welche mit den Bezugszeichen 100-102 versehen sind.

Da die Schneidschwerter 90-92, 97-102 sowohl axial als auch umfangseitig zur Mitte hin versetzt sind, wird eine seitliche "Verschmierung" beim Lockerungsvorgang des Bodens verhindert. Denn durch diese Anordnung der Schneidschwerter wird der Boden von den Außenkanten nach innen transportiert. Die Bewegung der Erde zwischen den Schneidschwertern 90-92, 97-102 bei Drehung des Rotavatorrades 9 wird in Fig.4 durch die Pfeile 41-44 angedeutet.

Der Vorgang des Transportes der Erde zur Mitte des Rotavatorrades hin wird dadurch unterstützt, daß die Schneidschwerter 90-92,97-102, in Rotationsrichtung 96 gesehen, gegenüber der Mittellinie 45 der Mantelfläche 40 des Rotavatorrades geneigt sind. Der entsprechende Neigungswinkel 103 der Schneidschwerter hängt von der Anzahl der verwendeten Schneidschwerter und ihrer Breite ab und beträgt bei dem dargestellten Ausführungsbeispiel etwa 5°.

Die Rotavatoren 7, 8 bewirken eine 50 cm tiefe Auflockerung des Bodens in einer 30 cm breiten Spur (im folgenden auch als Frässpur bezeichnet) und schaffen damit die Voraussetzungen für ein optimales Einbringen und Anwachsen der Pflanzen. Die Breite der Frässpur muß nicht unbedingt identisch mit der jeweiligen Reifenspur sein, sondern kann auch schmaler oder breiter als diese sein. Die Frässpurbreite von 30 cm wurde gewählt, weil bei Versuchen festgestellt wurde, daß der Boden nur bis zu einer Fräsbreite von ca. 30 cm in seiner lockeren Struktur erhalten bleibt. Dieses liegt daran, daß der Boden rechts und links der Frässpur durch den gewachsenen Boden festgehalten wird, während er bei einer größeren Frässpurbreite, insbesondere bei einem Ganzflächenumbruch, in sich zusammensackt und erneut verdichtet wird. Durch die variable Einstellung der Pflanzspur bleiben 80 % des Waldbodens (bei 3 m Pflanzabstand) bzw. 70 % (bei 2 m Pflanzabstand) unberührt.

Die Drehrichtung 96 der Rotavatorräder 9 wird genau entgegengesetzt zu der Drehrichtung der die Fahrtrichtung bestimmenden Fahrzeugräder 11,12,15,16 gewählt. Dadurch wird vermieden, daß sich an der Frässohle eine Verdichtung bildet. Die Erde wird in diesem Fall von unten nach oben transportiert, durch die Rotavatorgehäuse 70, 80 befördert und fällt auf der Rückseite der Rotavatoren 7, 8 gelockert in die Frässpur zurück. Würden die Rotavatorräder 9 hingegen die gleiche Drehrichtung aufweisen wie die Fahrzeugräder 11,12,15,16, so würde die Erde von oben nach unten gepreßt und damit unten stark verdichtet werden. Dieses würde zu einem Wasserstau führen, eine gute Durchlüftung des Bodens verhindern und ein Durchwachsen der Wurzeln nach unten behindern.

Die Rotationsgeschwindigkeit der Rotavatorräder 9 sollte vorzugsweise auf die Geschwindigkeit der Bodenbearbeitungsmaschine 1 abgestimmt sein; und zwar sollten sich die Rotavatorräder 9 so langsam drehen, daß eine grobe Krümelstruktur des Bodens erreicht wird, die für eine optimale Durchlüftung wichtig ist. Hierzu wird bei vorgegebener Fahrzeuggeschwindigkeit die Umdrehungszahl der Rotavatorräder 9 derart gewählt, daß jedes Schneidschwert 90-92, 97-102 den Boden nur einmal schneidet. Dieses bedeutet also insbesondere, daß das Schneidschwert 97 nicht in den bereits durch das Schneidschwert 90 aufgelockerten Boden eingreift, sondern die Umdrehungszahl der Rotavatorräder 9 so langsam ist, daß das Schneidschwert 97 in einen noch nicht gelockerten Bodenabschnitt eingreift. Bei zu hoher Rotationsgeschwindigkeit der Rotavatorräder 9 würde der Boden in eine zu feine Struktur zerhackt, Äste und Wurzeln in zu kleine Bestandteile zerlegt und eine zu schnelle Mineralisierung des Bodens erreicht. Der Boden soll deshalb in seiner groben Struktur erhalten bleiben, damit er in sich Halt findet und nicht zu schnell in sich zusammenfallen kann.

Die Rotavatoren 7, 8 sind mit den Stellgliedern (zugwirkenden Zylindern) 17 verbunden, weil sie sich aufgrund der gegenüber den Fahrzeugrädern 11,12,15,16 entgegengesetzten Drehrichtung der Rotavatorräder 9 in den Boden hineinziehen. Damit die Schneidschwerter 90-92,97-102 sich nicht tiefer als 50 cm in den Boden hineinarbeiten, üben die Zylinder 17 eine entgegenwirkende Zugkraft aus, die nicht größer ist als das Eigengewicht des jeweiligen Rotavators 7, 8 (ca. 1 t). Somit bleiben die Rotavatoren 7, 8 stets auf dem gewünschten Niveau für eine Pflanztiefe von 50 cm.

Treffen die Rotavatorräder 9 auf ein Hindernis (z.B. einen großen Stein oder einen Baumstumpf), deren Widerstand größer als die Rotationskraft der Rotavatorräder 9 ist, schalten die Räder 9 bei Erreichen eines Grenzdruckes automatisch in Freilauf um. Dadurch kann das jeweilige Rotavatorrad 9 über das Hindernis hinwegrollen, ohne daß die Fahrgeschwindigkeit der Maschine 1 verändert wird.

Die hinter den Rotavatoren 7, 8 angeordneten Pflanzaggregate 2, 3 können bei Ödlandaufforstung direkt an die Radkästen der Rotavatoren 7, 8 angekoppelt werden, weil es im Ödland mangels größerer Hindernisse keine senkrechten Ausweichbewegungen nach oben gibt. Bei Waldaufforstungen sind die Pflanzaggregate 2, 3 an unabhängig von den Rotavatoren 7, 8 befestigten Zugzylindern angebracht, damit sie beim Auftreffen auf ein größeres Hindernis Höhenausweichbewegungen unabhängig von den Bewegungen der Rotavatoren 7, 8 und der Bodenbearbeitungsmaschine 1 ausführen können.

## Patentansprüche

1. Verfahren zur maschinellen Bodenbearbeitung von zu bepflanzenden Flächen, insbesondere von mit Bäumen zu bepflanzenden Waldflächen, wobei der Boden mit Hilfe mindestens eines am heckseitigen Teil einer Bodenbearbeitungsmaschine (1) angeordneten Rotavators (7,8) aufgelockert wird, und wobei die Pflanzen (23) dann in diesen aufgelockerten Boden eingebracht werden, **dadurch gekennzeichnet**, daß nur der Boden im Bereich der hinter den durch die Bodenbearbeitungsmaschine (1) erzeugten Fahrspuren (Frässpur) mit dem Rotavator (7,8) aufgelockert wird.

2. Verfahren zur maschinellen Bodenbearbeitung von zu bepflanzenden Flächen, insbesondere von mit Bäumen zu bepflanzenden Waldflächen, wobei der Boden mit Hilfe mindestens eines am heckseitigen Teil einer Bodenbearbeitungsmaschine (1) angeordneten Rotavators (7,8) aufgelockert wird, und wobei die Pflanzen (23) dann in diesen aufgelockerten Boden eingebracht werden, **dadurch gekennzeichnet**, daß nur der Boden im Bereich der hinter den durch die Bodenbearbeitungsmaschine (1) erzeugten Fahrspuren mit dem Rotavator (7,8) aufgelockert wird, und daß sich die Rotavatorräder (9) der Rotavatoren (7,8) zur Vermeidung einer Preßsohle entgegen der Drehrichtung der Räder (11,12,15,16) der Bodenbearbeitungsmaschine (1) drehen.

3. Verfahren nach Anspruch 1 oder 2, **dadurch gekennzeichnet**, daß der Abstand der Fahrspuren der Bodenbearbeitungsmaschine (1) derart gewählt wird, daß er dem vorgegebenen Abstand der Pflanzreihen entspricht.

4. Verfahren nach einem der Ansprüche 1 bis 3, **dadurch gekennzeichnet**, daß der für ein gutes Anwachsen der Pflanzen erforderliche Dünger vor dem Auflockern des Bodens auf diesen im Fahrspurbereich aufgebracht wird.

5. Verfahren nach einem der Ansprüche 1 bis 4, **dadurch gekennzeichnet**, daß der zu bepflanzende Waldboden bis zu einer Tiefe von 50 cm und pro Fahrzeugspur in einer Breite von 30 cm aufgelockert wird.

6. Verfahren nach einem der Ansprüche 1 bis 5, **dadurch gekennzeichnet**, daß bei Verwendung von mit Schneidschwertern (90-92,97-102) versehenen Rotavatorrädern (9) die Umdrehungszahl der Rotavatorräder (9) zur Gewinnung einer groben Krümelstruktur des Bodens derart gewählt wird, daß bei einer vorgegebenen Fahrzeuggeschwindigkeit der Bodenbearbeitungsmaschine (1) jedes Schneidschwert den aufzulockernden Boden nur einmal schneidet.

7. Bodenbearbeitungsmaschine (1) zur Durchführung des Verfahrens nach einem der Ansprüche 1 bis 6, mit an der Maschine (1) angeordnetem Rotavator (7,8), **dadurch gekennzeichnet**, daß am hinteren Fahrzeugteil (6) der Bodenbearbeitungsmaschine (1) mindestens zwei Rotavatoren (7,8) vorgesehen sind, wobei die Rotavatorräder (9) der Rotavatoren (7,8) derart angeordnet sind, daß sie jeweils nur den Boden im Bereich der durch die Bodenbearbeitungsmaschine (1) erzeugten Spuren auflockern.

8. Bodenbearbeitungsmaschine (1) zur Durchführung des Verfahrens nach einem der Ansprüche 1 bis 6, mit an der Maschine (1) angeordnetem Rotavator (7,8), **dadurch gekennzeichnet**, daß am hinteren Fahrzeugteil (6) der Bodenbearbeitungsmaschine (1) mindestens zwei Rotavatoren (7,8) vorgesehen sind, wobei die Rotavatorräder (9) der Rotavatoren (7,8) derart angeordnet sind, daß sie jeweils nur den Boden im Bereich der durch die Bodenbearbeitungsmaschine (1) erzeugten Spuren auflockern, und daß die Rotavatorräder (9) der Rotavatoren (7,8) mit Schneidschwertern (90-92,97-102) versehen sind, die derart axial und umfangseitig versetzt angeordnet sind, daß der aufzulockernde Boden von den Außenkanten der Frässpur nach innen transportiert wird.

9. Bodenbearbeitungsmaschine (1) zur Durchführung des Verfahrens nach einem der Ansprüche 1 bis 5, mit an der Maschine (1) angeordnetem Rotavator (7,8), **dadurch gekennzeichnet**, daß am hinteren Fahrzeugteil (6) der Bodenbearbeitungsmaschine (1) mindestens zwei Rotavatoren (7,8) vorgesehen sind, wobei die Rotavatorräder (9) der Rotavatoren (7,8) derart angeordnet sind, daß sie jeweils nur den Boden im Bereich der durch die Bodenbearbeitungsmaschine (1) erzeugten Spuren auflockern, und daß die Rotavatoren (7,8) heckseitig an dem hinteren Fahrzeugteil (6) höhenvariabel angeordnet sind, so daß die Rotavatoren (7,8) beim Auftreffen auf feste Gegenstände nach oben ausweichen können.

10. Bodenbearbeitungsmaschine nach Anspruch 9, **dadurch gekennzeichnet**, daß die Rotavatoren (7,8) nur mit einem Bruchteil ihres Gewichtes auf die Achse der Rotavatorräder (9) drücken und der restliche Gewichtsanteil durch an dem Rotavatorfahrzeug (6) angeordneten Stellgliedern (17) kompensierbar ist.

11. Bodenbearbeitungsmaschine (1) zur Durchführung des Verfahrens nach einem der Ansprüche 1 bis 5, mit an der Maschine (1) angeordnetem Rotavator (7,8), **dadurch gekennzeichnet**, daß am hinteren Fahrzeugteil (6) der Bodenbearbeitungsmaschine (1) mindestens zwei Rotavatoren (7,8) vorgesehen sind, wobei die Rotavatorräder (9) der Rotavatoren (7,8) derart angeordnet sind, daß sie jeweils nur den Boden im Bereich der durch die Bodenbearbeitungsmaschine (1) erzeugten Spuren auflockern, und daß die Bodenbearbeitungsmaschine (1) als Radfahrzeuge ausgebildet sind, wobei die Räder auf in ihrer Höhe veränderbaren Radachsen (Boogie-Achsen; 26-29) angeordnet sind.

12. Bodenbearbeitungsmaschine (1) zur Durchführung des Verfahrens nach einem der Ansprüche 1 bis 5, mit an der Maschine (1) angeordnetem Rotavator (7,8), **dadurch gekennzeichnet**, daß am hinteren Fahrzeugteil (6) der Bodenbearbeitungsmaschine (1) mindestens zwei Rotavatoren (7,8) vorgesehen sind, wobei die Rotavatorräder (9) der Rotavatoren (7,8) derart angeordnet sind, daß sie jeweils nur den Boden im Bereich der durch die Bodenbearbeitungsmaschine (1) erzeugten Spuren auflockern, und daß die Bodenbearbeitungsmaschine (1) als Radfahrzeuge ausgebildet sind, wobei die Räder auf in ihrer Höhe veränderbaren Radachsen (Boogie-Achsen; 26-29) und die Radachsen (26-29) zur Anpassung an den Pflanzreihenabstand axial nach außen verschiebbar angeordnet sind.

13. Bodenbearbeitungsmaschine (1) zur Durchführung des Verfahrens nach einem der Ansprüche 1 bis 5, mit an der Maschine (1) angeordnetem Rotavator (7,8), **dadurch gekennzeichnet**, daß am hinteren Fahrzeugteil (6) der Bodenbearbeitungsmaschine (1) mindestens zwei Rotavatoren (7,8) vorgesehen sind, wobei die Rotavatorräder (9) der Rotavatoren (7,8) derart angeordnet sind, daß sie jeweils nur den Boden im Bereich der durch die Bodenbearbeitungsmaschine (1) erzeugten Spuren auflockern, und daß an dem Rotavatorfahrzeug (6) ein Substratbehälter (18) angeordnet ist, der mit Förderschnecken (19,20) verbunden ist, die das Substrat in die Fahrzeugspuren vor die Rotavatoren (7,8) befördern.

14. Bodenbearbeitungsmaschine nach einem der Ansprüche 1 bis 13, **dadurch gekennzeichnet**, daß die Bedienung der Maschine (1) fernsteuerbar ist.

15. Bodenbearbeitungsmaschine nach einem der Ansprüche 1 bis 14, **dadurch gekennzeichnet**, daß die Maschine (1) eine Knickgelenklenkung aufweist.

16. Bodenbearbeitungsmaschine nach einem der Ansprüche 1 bis 15, **dadurch gekennzeichnet**, daß heckseitig hinter den Rotavatoren (7,8) Pflanzaggregate (2,3) angeordnet sind.

17. Bodenbearbeitungsmaschine nach einem der Ansprüche 1 bis 16, **dadurch gekennzeichnet**, daß an dem vorderen Fahrzeugteil (4) der Bodenbearbeitungsmaschine (1) und/oder an den Pflanzaggregaten (2,3) Pflanzenbehälter (13,21,22) zur Bevorratung der einzupflanzenden Pflanzen (14,23) angeordnet sind.
